# EUROPEAN PATENT APPLICATION

(11) **EP 4 822 876 A1**
(43) Date of publication of application: **14.10.2026**
(21) Application number: 25168875.0
(22) Date of filing: 07.04.2025
(51) Int. Cl.: H01M 50/507, H01R 11/28, H01R 25/16, H01M 50/517, H02G 5/00, H02G 5/06, H01M 50/526, H01M 50/583

(54) **A BUSBAR SYSTEM OF AN ENERGY STORAGE MODULE**

(71) Applicant: Enico Oy, 33840 Tampere (FI)
(72) Inventor: LÄHTEENMÄKI, Marko, Tampere (FI); REPONEN, Marko, Tampere (FI)
(74) Representative: Berggren Oy

(57) **Abstract**

A conductor rail system (B1, B2, B3, B4) of an energy storage module, comprising a busbar system (21A, 21B, 21C, 21D) having at least two busbars (29A, 29B, 92C, 29D). Each busbar comprises at least one conductor bar (29F). Further, each busbar comprises fixing elements (30, 34) The conductor bars of each busbar are electrically connected with each other and a cross-sectional area of each busbar (29A, 29B, 92C, 29D) is determined by a number of the conductor bars (29F) and the cross-sectional area of the conductor bar.

## Description

### Field of technology

The invention relates to energy storage modules. Especially the invention relates to busbar systems of energy storage modules.

### Prior art

There are different energy storages. Energy storages are used to store energy and release it when needed. Energy can be economically stored in an energy storage from the electrical grid when the price of electricity is low. Similarly, the energy stored in the energy storage can be used in electrical loads or the electrical grid, for example, when the price of electricity is high.

An energy storage system can be a modular, as presented in US 10404039. Energy storage modules can be connected to each other to achieve the desired energy storage capacity. Energy storage modules have conductor rail systems that can be connected to the corresponding conductor rail systems of other energy storage modules. The structure of the conductor rails system can be relatively space consuming.

### Short description

The object of the invention is to provide an alternative structure for the conductor rail system of the energy storage module. The object is achieved in a way described in the independent claim. Dependent claims illustrate different embodiments of the invention.

A conductor rail system (B1, B2, B3, B4) of an energy storage module according to the invention comprises a busbar system (21A, 21B, 21C, 21D) having at least two busbars (29A, 29B, 92C, 29D). Each busbar (29A, 29B, 92C, 29D) comprises at least one conductor bar (29F) having connection surfaces in order that the conductor bars are electrically connectable with each other.

The bus bar system also comprises fixing elements (30, 34, 40, 45) to connect and to keep the conductor bars of each busbar with each other through the connection surfaces. The cross-sectional area of each busbar (29A, 29B, 92C, 29D) is determined by a number of the conductor bars (29F) and a cross-sectional area of the conductor bar.

A conductor rail system of an energy storage module according to the invention comprises a busbar system having at least two busbars. Each busbar comprises at least one flat bar having fixing holes. Further, each busbar comprises bolts and nuts, the bolts being through the fixing holes. The bolts and nuts are arranged to fix the flat bars with each other and with a body of the energy storage module. The flat bars of each busbar are electrically connected with each other and a cross-sectional area of each busbar is determined by a number of the flat bars.

### List of figures

In the following, the invention is described in more detail by reference to the enclosed drawings, where
- Figure 1: illustrates a schematic example of an energy storage arrangement comprising several energy storage modules,
- Figure 2: illustrates another schematic example of an energy storage arrangement comprising several energy storage modules,
- Figure 3: illustrates an example of conductor rail systems of several energy storage modules where the rail systems are connected together,
- Figure 4: illustrates a view of a conductor rail system of an energy storage module,
- Figure 5: illustrates a view of a busbar system of the conductor rail system of figure 4,
- Figure 6: illustrates an example of a conductor bar being a square profile bar,
- Figure 7: illustrates an example of a conductor bar being a flat bar,
- Figure 8: illustrates an example of a fixing element being a U-bolt element, and
- Figure 9: illustrates an example of a fixing element being a spring clamp.

### Description of the invention

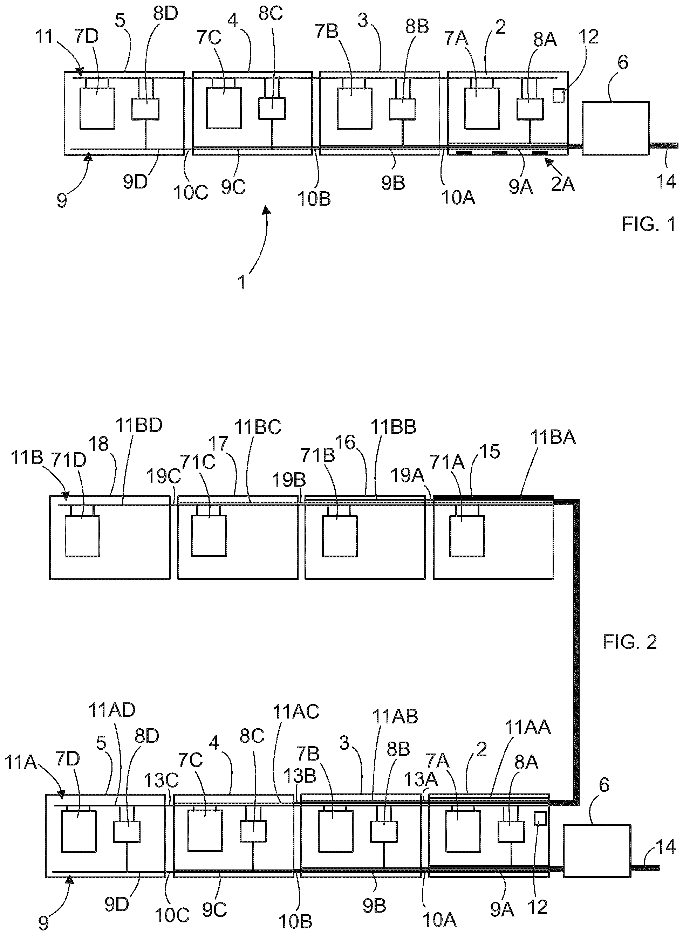

Figure 1 illustrates a schematic example of an energy storage arrangement 1 comprising several energy storage modules 2, 3, 4, 5. Each module of the example comprises a battery unit 7A, 7B, 7C, 7D and an inverter 8A, 8B, 8C, 8D. The battery units may comprise one or more batteries depending on an implementation of the battery unit.

In each energy storage module, the battery unit 7A, 7B, 7C, 7D is connected to the inverter 8A, 8B, 8C, 8D. In this example the connection is through a DC (direct current) busbar system having busbars for two potential levels. The inverter converts the DC current to an AC (alternative current) current. The inverter is further connected to an AC busbar system 9A, 9B, 9C, 9D in the module. In practical arrangements the busbar systems are parts to conductor rail systems having other elements as well.

The busbar systems, more accurately their busbars, in the embodiment of figure 1 are connected together providing common busbar systems 9, 11 through the energy storage arrangement 1. The connections are made using connectors 10A, 10B, 10C, 10D having connector bars. The connectors 10A, 10B, 10C, 10D refers to the connections between the AC busbar systems 9A, 9B, 9C, 9D in figure 1, but the DC busbars systems of the modules can be connected also using the connectors. Although the DC busbar systems of the energy storage modules 1, 2, 3, 4, 5 in figure 1 are connected to each other providing the common DC busbar system 11, it is also possible that the DC busbar systems are not connected to each other.

The energy of the energy storage arrangement 1 can be delivered to a load or a grid 14 from the common AC busbar system 9 through a transformer 6. In this solution, one energy storage module 2 is arranged to be as a master module comprising a control unit 12 to drive the whole energy storage arrangement. The control unit can be or comprise a PLC (Programmable Logic Controller). The master module is also the module through which the energy storage arrangement is connected outside, like to the transformer 6. The other modules are submodules 3, 4, 5 from the view of the main module 2. There is a communication line/connection (not illustrated in the figures) among the modules, so that the a control unit 12 can drive the whole energy storage arrangement.

It is worth to mention that figure 1 is a schematic drawing illustrating busbars systems in single lines, not showing lines for each phase or voltage levels.

As mentioned, the prior art busbar systems are space consuming. Furthermore, they are material intensive. According to the invention a busbar system / rail conductor system is made so that it requires relatively little space, and it is easily scalable for higher power delivery demands.

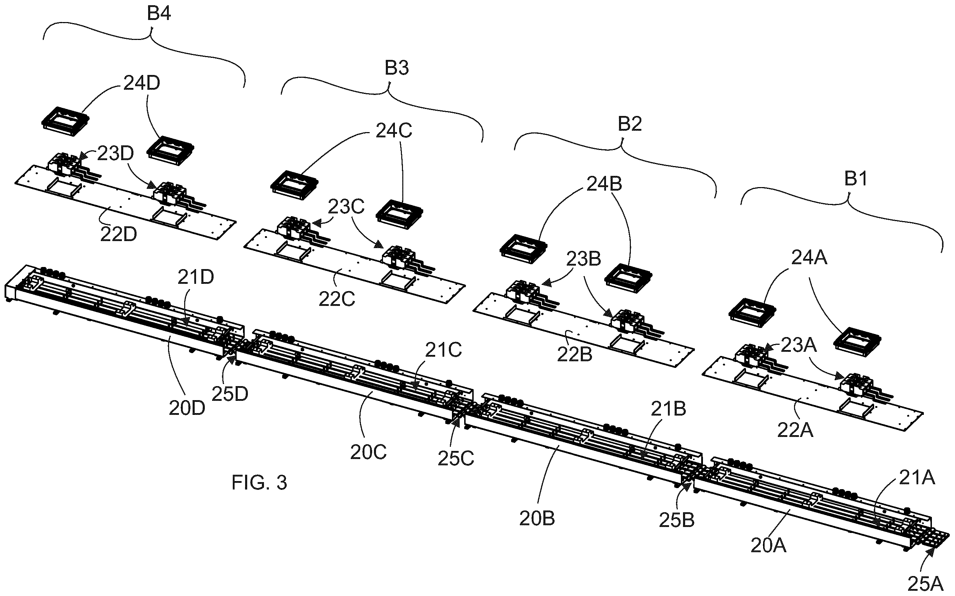

A conductor rail system B1, B2, B3, B4 of an energy storage module according to the invention comprises a busbar system 21A, 21B, 21C, 21D having at least two busbars 29A, 29B, 92C, 29D. Each busbar 29A, 29B, 92C, 29D comprises at least one conductor bar 29F having connection surfaces in order that the conductor bars are electrically connectable with each other. See figures 3, 4 and 5. The bus bar system also comprises fixing elements 30, 34, 40, 45 to connect and to keep the conductor bars of each busbar with each other through the connection surfaces. The cross-sectional area of each busbar (29A, 29B, 92C, 29D) is determined by a number of the conductor bars (29F) and a cross-sectional area of the conductor bar.

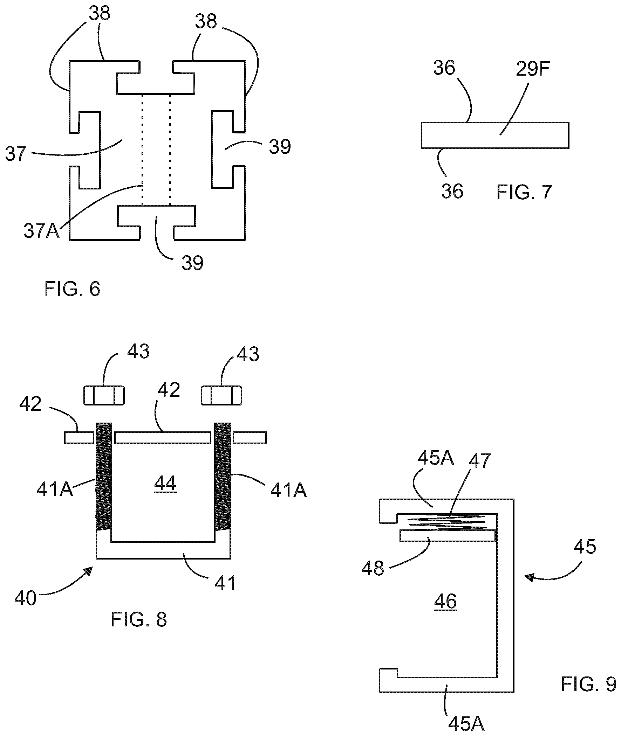

The conductor bar/s can be a flat bar, a square bar or a square profile bar having said connection surfaces. Figure 6 shows an example of a square profile bar 37. Figure 7 shows an example of a flat bar 29F. In both of these examples the connections surfaces 38, 36 provide good electrically conductive connections between similar conductor bars. So, the connection surfaces between conductor bars are against each other. Several connection bars can be on top of each other. In these examples, the connection surfaces are flat surfaces. The area of the connection surfaces is also large enough to provide a good electrical connection and also a good mechanical support when using the fixing elements.

The embodiment 37 of figure 6 has T-grooves 39 on each side. The T-groove can be used to for attaching a nut, and when the square profile bars comprise a bore 37A through each bar, a number of the bars can be attached together by a bolt situated on the bores and the nut. If the example of figure 6 is without the T-grooves, it provides a square bar that can also be used as the conductor bar. The square bar can also have a bore 37A through it.

The fixing elements can be U-bolts elements 40 as illustrated in an embodiment of figure 8. The U-bolt element comprises a U-bolt 41 having two branches where nuts 43 can be attached. Before attaching the nuts, a fixing plate 42 is placed through its holes with the branches. The space 44 between the branches 41A of the U-bolt is the place where the conductor bars are when fixing them together.

The fixing elements can also be spring clamps 45 as illustrated in a schematic embodiment of figure 9. In this embodiment the spring clamp comprises two branches 45A, a spring 47 and a plate 48 attached with the spring 47. The space 44 between one branch 45A and the plate 48 is the place where the conductor bars are when fixing them together. The spring 47 is strong so that the conductor bars are firmly against each other.

The conductor bar/s (29F) can also be a flat bar, as illustrated in figure 7. The examples of figures 3, 4 and 5 show also the flat bars as the conductor bars. The example of figures 3, 4 and 5 are described below. It is worth noting that although these examples use the bolts and nuts as the fixing elements and the flat bars as the conductor bars, other fixing elements and the conductor bar structures can also be used as illustrated above.

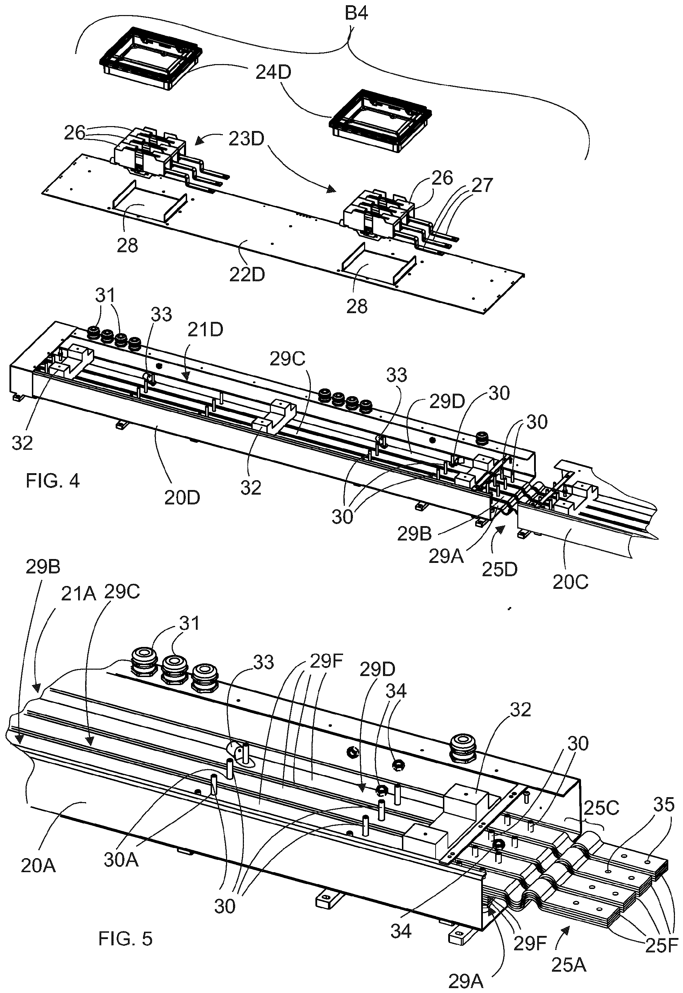

A conductor rail system B1, B2, B3, B4 of an energy storage module according to the invention comprises a busbar system 21A, 21B, 21C, 21D having at least two busbars 29A, 29B, 92C, 29D. See figures 3, 4 and 5. Figure 3 illustrates an example of conductor rail systems B1, B2, B3, B4 of several energy storage modules where the rail systems are connected together. Figure 4 illustrates a view of a conductor rail system B4 of an energy storage module, and figure 5 illustrates a view of a busbar system 21A of the conductor rail system B1 of figure 4. Each busbar 29A, 29B, 92C, 29D comprises at least one flat bar 29F having fixing holes 30A. Each busbar further comprises bolts 30 and nuts 34. The bolts 30 are through the fixing holes 30A, and the bolts and nuts are arranged to fix the flat bars 29F with each other. The bolts and nuts can also be used to attach the busbar system with the body 2A of the energy storage module, and/or with other elements of the conductor rail system.

The flat bars of each busbar are electrically connected with each other and a cross-sectional area of each busbar 29A, 29B, 92C, 29D is determined by a number of the flat bars 29F and the cross-sectional area of the flat bar.

The body 2A of the energy storage module is only schematically illustrated in figure 1 with one energy storage module, but it is clear that each energy storage module has a body.

The flat bars are easy to install in such a way that they consume little space. Different square bars are also good. Further, the several flat bars (and square bars) can be installed so that they increase the cross-sectional area of the busbar, and the flat bars are electrically connected with each other. In this way the busbar can easily be scaled to a desired power transmission capacity. The cross-sectional area (in other words thickness) of the busbar is a parameter that with the material of the busbar determines the power transmission capacity. Therefore, the common busbar 11, 9 does not need to be designed for the highest power transmission capacity in the whole system.

In the embodiment of figure 1 the master energy storage module 2 has the busbar system 9A having four flat bars 29F together providing the biggest transmission capacity in the whole system. The biggest transmission capacity is needed in the master module since the whole power capacity of the energy storage arrangement 1 is delivered through it to the load/grid 14.

The submodule 3 next to the master module 2 transmits its power from the battery unit 7B to the master module and can also transmit the power from the other submodules 4, 5 through it. Therefore, the busbar system 9B of the submodule 3 has three flat bars 29F together in each busbar providing suitable power capacity in this embodiment. The fourth flat bar is not needed and thus material is saved. The number of the flat bars in the next submodule 4 in the line of structure of figure 1 can be smaller, because the power what is designed to transmit through it is smaller, i.e. power from the battery unit 7C in the energy storage unit 4, and from the battery unit 7D, in the energy storage unit 5. The busbar system 9D of the energy storage unit 5 is designed to transmit power only from the same module i.e. from the battery unit 7D, so only one flat bar is needed in each busbar of the busbar system 9D.

The scalability of the AC busbars is illustrated in figure 1, but the DC busbars can also be scaled with the similar manner. Figure 2 illustrates another example of an energy storage arrangement comprising several energy storage modules. In this example there are eight energy storage modules where four 15, 16, 17, 18 of them do not have an inverter and an AC busbar system / conductor rail system. The battery units 71A, 71B, 71C, 71D of these modules are connected to the busbar systems 11BA, 11BB, 11BC, 11BD of the modules. These DC busbar systems are connected to each other using connectors 19A, 19B, 19C, 19D. The connectors have been scaled with the similar way to a desired transmission capacity than the busbar systems in the modules, as described above. Together the busbar systems 11BA, 11BB, 11BC, 11BD of the modules forms a common busbar system 11B. The module 15 is connected to a master module 2 of the arrangement. Since this module 15 is arranged to transmit energy from the modules 16, 17, 18, it's busbar system comprises four flat bars in each busbar. Also, the connection between the module 15 and the master module 2 has four flat bars in each line. Since the transmission capacity needed in the next module 16 in lesser the number of the flat bars is three in each busbar in the module. Respectively, two flat bars in each busbar are required in the next module 17, and only one flat in each bus bar in the module 18.

The modules 2, 3, 4, 5 in the embodiment of figure 2 correspond in many ways the modules in the figure 1 except that the common DC busbar system 11A has be scaled in each module similarly as already described. There are four flat bars in each busbar 11AA inside the module 2, three in each busbar 11AB, inside the module 3, two in each busbar 11AC inside the module 4 and one in each busbar 11AD inside the module 5. The connectors 13A, 13B, 13C, 13D, 10A, 10B, 10C 10D in the DC busbar system and the AC busbar system have been scaled with the similar way to a desired transmission capacity than the busbar systems in the modules. Also in this example, the master module 2 is connected to a load / grid via a transformer 6. It is worth to mention that in some embodiments the transformer is not needed, and the master module can be directly connected to a load/grid.

Figure 3 shows an example of conductor rail systems B1, B2, B3, B4 of several energy storage modules. As already said, the busbar systems 21A, 21B, 21C, 21D are parts of the conductor rail system having other elements as well. In this embodiment the conductor rail systems, more precisely the busbar systems are connected to each other vie the connectors, more precisely via connector bars 25B, 25C, 25D. The free illustrated connector bars 25A are for connected the whole busbar system to a load /grid via a transformer as described above.

In this embodiment the conductor rail system of each energy storage module 2, 3, 4, 5 (figure 1) comprises a casing 20A, 20B, 20C, 20D wherein the busbar system 21A, 21B, 21C, 21D is installed. Said bolts 30 and nuts 34, or other fixing elements can be used for the installation. The casing provides safety, which is important if maintenance work is made in the module. Further in this embodiment, the conductor rail system B1, B2, B3, B4 can comprise at least one fuse holder group 23A, 23B, 23C, 23D, and the casing has a cover 22A, 22B, 22C, 22D having at least one hole 28 for said at least one fuse holder group. Cover can also be without fuse holder and related openings.

Further, the conductor rail system of the energy storage module can comprise at least one lid 24A, 23B, 24C, 24ED for the said at least one fuse holder group. The casing, the cover and the lid provide safety structures around the busbar system.

Figure 3 illustrates a view of a conductor rail system B4 of an energy storage module. As can be seen the fuse holder group comprises three fuse elements 26, when the busbar system is the AC system, having three phases. One fuse element is for one phase. The fuse element is connected to the busbar of the phase through a fuse connector 27.

So, the busbar system for the AC current can comprise three busbars 29A, 29B, 29C. Further, the AC busbar system can comprise a neutral/ground busbar 29D, which can also be connected to other elements through coupler/s 33. See figure 4. Said bolts and nuts of the neutral/ground busbar 29D are used with the coupler/s. If the busbars system is for the DC current, the busbar system can comprise at least two busbars for two different potential levels or more potential levels. In addition, the DC busbar system may also have the neutral/ground busbar. The conductor rail system of the energy storage module can also comprise other elements, for example non-conductor elements 31, support pieces 32.

Each busbar 29A, 29B, 92C, 29D can comprise a connector bar 25A, 25B, 25C, 25D comprising at least one second conductor bar 25F. The connector bars 25A, 25B, 25C, 25D are arranged to connect the busbar system 21A, 21B, 21C, 21D of the energy storage module to a corresponding busbar system of another energy storage module. Further, each busbar 29A, 29B, 92C, 29D can comprise another similar connector bar 25A, 25B, 25C, 25D to connect the busbar system to a yet another corresponding busbar system. The second conductor bars comprise a curve portion 25C in order to provide flexibility between the energy storage modules.

The connector bars can be structured so that the energy storage modules are installed in one line so that the common busbar system is in one line. The connector bars may also be formed so they have a U shape, in which case the energy storage modules are next to each other and the common busbars system has an undulating form.

Regarding the examples of figures 3 - 5 each busbar 29A, 29B, 92C, 29D can also comprise a connector bar 25A, 25B, 25C, 25D comprising at least one second flat bar 25F having second fixing holes 35 for said bolts. The connector bars 25A, 25B, 25C, 25D are arranged to connect the busbar system 21A, 21B, 21C, 21D of the energy storage module to a corresponding busbar system of another energy storage module. Figure 3 shows how the connector bars connect four busbar systems together. Depending on how the busbar system is implemented, one busbar system can have in each busbar 29A, 29B, 92C, 29D another similar connector bar 25A, 25B, 25C, 25D to connect the busbar system to a yet another corresponding busbar system. For example, in figure 2 the busbar system 21C can have the connector bars 25C and 25D for the connections with the other busbar systems 21B, and 21D. Another implementation is that the busbar system 21C has the connector bar 25C for the connections with the busbar system 21B, and the busbar system 21D has the connector bar 25 for the connections with the busbar system 21C.

Further, as can be seen in the figures, the second flat bars comprise conveniently a curve portion 25C. The curve portion provides flexibility between the adjacent energy storage module. As illustrated each connector bar 25A, 25B, 25C, 25D comprises second flat bars 25F for each phase or potential level. A number of the second flat bars can be placed together one on the other, in a similar way as the flat bars 29F of each busbar 29A, 29B, 29C, 29D. As said, the bolts 30 and nuts 34 can be utilized when for installing the flat bars. The number of the flat bars and the second flat bars affects to the power transmission capacity as already illustrated.

As already said, the busbar system 21A, 21B, 21C, 21D can be a direct current system having at least two busbars or an alternative current system having three busbars, with or without a further busbar 29D, i.e. a neutral/ground busbar or a further potential level. The invention provides a space saving and safe structure for a conductor rail system B1, B2, B3, B4 of the energy storage module. In addition, the arrangement according to the invention is scalable for a desired power transmission capacity in each energy storage module of an energy storage arrangement. The conductor bars 29F, 37 are firmly attached to each other when at least two conductor bars are together. The firm attachment hinders possible vibration movements of the conductor bars, for example in case of a short cut.

As can be seen the invention can be realized in many ways. It is evident from the above that the invention is not limited to the embodiments described in this text but can be implemented in many other different embodiments within the scope of the independent claims.

## Claims

1. A conductor rail system (B1, B2, B3, B4) of an energy storage module, which comprises a busbar system (21A, 21B, 21C, 21D) having at least two busbars (29A, 29B, 92C, 29D), **characterised in that** each busbar (29A, 29B, 92C, 29D) comprises at least one conductor bar (29F) having connection surfaces in order that the conductor bars are electrically connectable with each other,
the bus bar system also comprising fixing elements to connect and to keep the conductor bars of each busbar with each other through the connection surfaces, and
a cross-sectional area of each busbar (29A, 29B, 92C, 29D) is determined by a number of the conductor bars (29F) and a cross-sectional area of the conductor bar.

2. A conductor rail system of an energy storage module according to claim 1, **characterised in that** the conductor rail system comprises a casing (20A, 20B, 20C, 20D) wherein the busbar system (21A, 21B, 21C, 21D) is installed.

3. A conductor rail system of an energy storage module according to claim 2, **characterised in that** the conductor rail system B1, B2, B3, B4 comprises at least one fuse holder group (23A, 23B, 23C, 23D), and the casing has a cover (22A, 22B, 22C, 22D) having at least one hole (28) for said at least one fuse holder group.

4. A conductor rail system of an energy storage module according to claim 3, **characterised in that** it comprises at least one lid (24A, 23B, 24C, 24D) for the said at least one fuse holder group.

5. A conductor rail system of an energy storage module according to claim 1, 2, 3, or 4, **characterised in that** the each busbar (29A, 29B, 92C, 29D) comprises a connector bar (25A, 25B, 25C, 25D) comprising at least one second conductor bar (25F), the connector bars (25A, 25B, 25C, 25D) being arranged to connect the busbar system (21A, 21B, 21C, 21D) of the energy storage module to a corresponding busbar system of another energy storage module.

6. A conductor rail system of an energy storage module according to claim 5, **characterised in that** each busbar (29A, 29B, 92C, 29D) comprises another similar connector bar (25A, 25B, 25C, 25D) to connect the busbar system to a yet another corresponding busbar system.

7. A conductor rail system of an energy storage module according to claim 5 or 6, **characterised in that** the second conductor bars comprise a curve portion (25C).

8. A conductor rail system of an energy storage module according to claim 1, 2, 3, 4, 5, 6 or 7, **characterised in that** the busbar system (21A, 21B, 21C, 21D) is a direct current system having two busbars.

9. A conductor rail system of an energy storage module according to any of claim 1 - 8, **characterised in that** the busbar system (21A, 21B, 21C, 21D) is an alternative current system having three busbars.

10. A conductor rail system of an energy storage module according to claim 8 or 9, **characterised in that** the busbar system (21A, 21B, 21C, 21D) comprises a further busbar.

11. A conductor rail system of an energy storage module according to any of claim 1 - 10, **characterised in that** the conductor bar/s (29F) is a flat bar, a square bar or a square profile bar having said connection surfaces.

12. A conductor rail system of an energy storage module according to claim 11, **characterised in that** the conductor bar/s has fixing holes (30A), and the fixing elements are bolts (30) and nuts (34),
each busbar comprising said bolts (30) and nuts (34), the bolts (30) being through the fixing holes (30A), the bolts and nuts being arranged to fix the conductor bars (29F) with each other.

13. A conductor rail system of an energy storage module according to claim 11, **characterised in that** the fixing elements are U-bolts and nuts.

14. A conductor rail system of an energy storage module according to claim 11, **characterised in that** the fixing elements are spring clamps.

15. A conductor rail system of an energy storage module according to claim 5, **characterised in that** the conductor bar/s (29F) is a flat bar, and the fixing elements are bolts (30) and nuts (34), and said at least one second conductor bar (25F) is a second flat bar (25F) having second fixing holes (35) for said bolts, the connector bars (25A, 25B, 25C, 25D) being arranged to connect the busbar system (21A, 21B, 21C, 21D) of the energy storage module to a corresponding busbar system of another energy storage module.

16. A conductor rail system of an energy storage module according to claim 15, **characterised in that** each busbar (29A, 29B, 92C, 29D) comprises another similar connector bar (25A, 25B, 25C, 25D) to connect the busbar system to a yet another corresponding busbar system.

17. A conductor rail system of an energy storage module according to claim 15 or 16, **characterised in that** the second flat bars comprise a curve portion (25C).
